# EUROPÄISCHE PATENTANMELDUNG

(11) **EP 3 372 295 A1**
(43) Veröffentlichungstag der Anmeldung: **12.09.2018**
(21) Anmeldenummer: 17159370.0
(22) Anmeldetag: 06.03.2017
(51) Int. Cl.: B01D 46/00, B60H 3/06

(54) **ZULUFTANORDNUNG FÜR EINE MOBILE EINRICHTUNG**

(71) Anmelder: Carl Freudenberg KG, 69469 Weinheim (DE)
(72) Erfinder: Scholz, Tobias, 68519 Viernheim (DE); Kurtz, Oliver, 69231 Rauenberg (DE); Stahl, Ulrich, 69514 Laudenbach (DE); Arnold, Anette, 64342 Seeheim-Jugenheim (DE); Bräunling, Volker, 64646 Heppenheim (DE); Hemmerling, Judith, 75015 Bretten (DE)

(57) **Zusammenfassung**

Zuluftanordnung (10) für eine mobile Einrichtung, umfassend zumindest einen Einlass (13), zumindest eine Luftführung (4), zumindest einen Auslass (14) und eine Filteranordnung mit mindestens zwei Filterelementen (1, 2), wobei ein erstes Filterelement (1) und ein separat zu dem ersten Filterelement ausgebildetes zweites Filterelement (2) in der Luftführung (4) angeordnet sind.

## Beschreibung

Die Erfindung betrifft eine Zuluftanordnung für eine mobile Einrichtung, umfassend einen Einlass, zumindest eine Luftführung, einen Auslass und eine Filteranordnung mit mindestens zwei Filterelementen.

Es ist bekannt, Filteranordnungen zur Aufbereitung der Kabinenluft von Kraftfahrzeugen einzusetzen. Aus der EP 3 015 155 A1 ist eine Filteranordnung bekannt, bei welchem die Filteraufgaben Adsorptionsfiltration und Partikelfiltration in einem Filter zusammengefasst sind. Dabei hält die als Partikelfilter ausgebildete Filterlage partikelförmige Bestandteile aus der Zuluft zurück, beispielsweise Staub und Pollen. Die als Adsorptionsfilter ausgebildete Filterlage hält unerwünschte gasförmige Bestandteile aus der Zuluft zurück, beispielsweise Schadgase, Gerüche, Benzol oder Ozon.

Bei der Ausgestaltung des Filterelementes als Innenraumfilter für mobile Einrichtungen wurden somit bislang die Filterfunktionen in einem einzigen Bauteil kombiniert. Hierbei ist nachteilig, dass lediglich Filterfunktionen kombiniert werden können, welche bauartbedingt in einem einzigen Filterelement angeordnet werden können.

Der Erfindung liegt die Aufgabe zugrunde, eine Filteranordnung für eine mobile Einrichtung bereitzustellen, welche eine optimale Abstimmung verschiedener Filterelemente auf verschiedene Filtrationsaufgaben ermöglicht.

Diese Aufgabe wird mit den Merkmalen von Anspruch 1 gelöst. Auf vorteilhafte Ausgestaltungen nehmen die Unteransprüche Bezug.

Die erfindungsgemäße Zuluftanordnung für eine mobile Einrichtung umfasst einen Einlass, zumindest eine Luftführung, einen Auslass sowie eine Filteranordnung mit mindestens zwei Filterelementen, wobei ein erstes Filterelement und ein separat zu dem ersten Filterelement ausgebildetes zweites Filterelement in der Luftführung angeordnet sind.

Dadurch ergibt sich eine Funktionstrennung der in der Luftführung angeordneten Filterelemente, so dass jedes Filterelement optimal auf die dem Filterelement zugeordnete Filteraufgabe abgestimmt werden kann. Durch die in Reihe geschalteten Filterelemente ergibt sich eine sehr leistungsfähige Aufbereitung der Zuluft durch die Filteranordnung.

Die Filteranordnung kann mindestens drei Filterelemente aufweisen. Nach einer weiteren Ausgestaltung kann die Filteranordnung mindestens vier Filterelemente aufweisen. Dies ermöglicht den Einsatz spezialisierter Filterelemente in der Luftführung, so dass eine Vielzahl vollkommen unterschiedlicher Filteraufgaben von der Filteranordnung gelöst werden kann. Dabei ist es insbesondere nicht erforderlich, dass die Filterelemente gemeinsam montierbar sind und in einem gemeinsamen Einbauraum untergebracht werden. Die Filterelemente können vielmehr verteilt in der Luftführung angeordnet sein. Dabei können die Filterelemente auch an den zur Verfügung stehenden Bauraum angepasst sein. Dazu können beispielsweise einige Filterelemente rohrförmig ausgebildet sein.

Zumindest ein Filterelement kann als Partikelfilter ausgebildet sein. Ein Partikelfilter hält partikelförmige Begleitstoffe unterschiedlicher Größe zurück.

Partikelfilter im Sinne der vorliegenden Erfindung können Grob-Partikelfilter und/oder Fein-Partikelfilter sein.

Ein Fein-Partikelfilter ist ein Faltenfilter, der eine besonders hohe Abscheideeffizienz gegenüber kleinen und kleinsten Partikeln aufweist. Zu den kleinen und kleinsten Partikeln gehören beispielsweise Partikelfraktionen der Klassen PM1 und PM2.5. Die als Feinstaub (PM1) bezeichnete Staub- bzw. Partikelfraktion enthält 50% der Teilchen mit einem Durchmesser von 1,0 µm, einen höheren Anteil kleinerer Teilchen und einen niedrigeren Anteil größerer Teilchen. Die als Feinstaub (PM2.5) bezeichnete Staub- bzw. Partikelfraktion enthält 50% der Teilchen mit einem Durchmesser von 2,5 µm, einen höheren Anteil kleinerer Teilchen und einen niedrigeren Anteil größerer Teilchen. Der Fein-Partikelfilter ist ausgerüstet, Partikel der Staubfraktionen PM1 und PM2.5 abzuscheiden.

Bei derartigen Partikelfiltern ist es vorteilhaft, wenn die groben Partikel zuvor durch einen Vorfilter zurückgehalten werden. In diesem Fall können die feinen Partikel wie Feinstaub durch einen Faltenfilter zurückgehalten werden, der speziell für eine effiziente Filtrationsleistung ausgestaltet ist.

Durch vorteilhafte und separate Ausgestaltung des Faltenfilters kann der Druckverlust auf ein Minimum reduziert und gleichzeitig die Filtrationsleistung erhöht werden. Durch die von einem Adsorptionsfilter separierte Ausgestaltung eines Fein-Partikelfilters wird die Luftqualität in der Fahrzeugkabine erheblich verbessert, was insbesondere für Allergiker einen großen Vorteil darstellt.

Bei gleichzeitiger Verwendung eines Vorfilters und eines Fein-Partikelfilters kann die Standzeit eines Fein-Partikelfilters signifikant verlängert werden. Dabei ist der Vorfilter den groben Partikeln ausgesetzt, während der Fein-Partikelfilter nur den kleinen und feinen Partikeln ausgesetzt ist. Auf diese Weise wird der Fein-Partikelfilter entlastet und die Standzeit verlängert.

Ein vorteilhafter Partikelfilter ist dabei als Faltenfilter ausgebildet, umfassend zumindest eine Lage aus einem Vliesstoff. Aus Vliesstoff ausgebildete Faltenfilter sind kostengünstig und weisen aufgrund der verhältnismäßig großen Filteroberfläche eine hohe Filtrationsleistung auf.

Zumindest ein Filterelement kann als Adsorptionsfilter ausgebildet sein. Ein Adsorptionsfilter hält unerwünschte gasförmige Bestandteile aus der Zuluft zurück, beispielsweise Schadgase, Gerüche, Benzol oder Ozon.

Adsorptionsfilter im Sinne der vorliegenden Erfindung können Kombifilter, Wabenfilter, adsorptive Schüttungen, imprägnierter Schaum und/oder Zeolithe sein.

Als Adsorptionsfilter können insbesondere gefaltete Kombifilter zum Einsatz kommen, die neben potentieller Partikelfiltrationseigenschaften hervorragende Adsorptionseigenschaften aufweisen können. Als Kombifilter werden im Allgemeinen Filtervliese bezeichnet, die mit einer zusätzlichen Lage Aktivkohle ausgestattet werden. Häufig wird zur Stabilisierung ein weiteres Filtervlies als Abdecklage vorgesehen, so dass die Aktivkohlelage sandwichartig in Filterlagen eingebunden ist.

In Fällen, bei denen insbesondere niedrige Druckverluste bei hoher Adsorptionskapazität erzielt werden sollen, können auch Wabenfilter, auch bezeichnet als Honeycombs, als Adsorptionsfilter eingesetzt werden. Derartige mit Kanälen versehene Wabenfilter können zudem als akustische Dämmelemente fungieren. Ein derartiger Filter weist einen besonders niedrigen Luftwiderstand auf. Gleichzeitig ergibt sich durch die Vielzahl von Kanälen, begrenzt durch Kanalwände, eine hohe Filtrationsoberfläche, welche eine besonders hohe Gasfiltrationsleistung bewirkt. Ein Wabenfilter kann hinsichtlich des gewünschten Luftwiderstands und der gewünschten Gasadsorptionsleitung besonders gut anwendungsspezifisch eingestellt werden. Hierzu können die Außenabmessungen, die Länge und Anzahl der Kanäle sowie die Querschnittsfläche der Kanäle modifiziert werden.

Der Wabenfilter kann segmentweise ausgebildet sein, wobei mehrere Segmente in Form von Wabenkörpern in einem Halterahmen gehalten und zu einem Wabenfilter zusammengesetzt sind.

Dabei umfasst der Wabenfilter vorzugsweise Aktivkohle. Der Wabenfilter kann vollständig aus Aktivkohle ausgebildet sein. Alternativ ist es auch denkbar, Aktivkohle mit anderen sorptionsfähigen Materialien zu mischen. Denkbar ist hier insbesondere der Einsatz von Kieselsäure. Aktivkohle bzw. Mischungen aus Aktivkohle und Kieselsäure werden mit einem Bindemittel vermischt und zu einem Wabenfilter geformt. Derartige Filter weisen eine hohe Filtrationsleistung zum Entfernen unerwünschter gasförmiger Bestandteile auf.

Ein vorteilhafter Wabenkörper bzw. Wabenfilter umfasst mindestens 55 Gew.% Aktivkohle. Des Weiteren kann der Wabenfilter Begleitstoffe enthalten. Vorteilhafte Begleitstoffe sind beispielsweise Glaskohlenstoff und/oder Alumosilikat. Die Zelldichte des Wabenkörpers, also die Anzahl der Kanäle je Flächeneinheit, beträgt vorzugsweise zwischen 10 und 120 Zellen/cm², besonders bevorzugt zwischen 40 und 95 Zellen/cm².

Nach einer weiteren Ausführungsform kann der Adsorptionsfilter auch als adsorptive Schüttung ausgeführt werden. Dies ist insbesondere dann vorteilhaft, wenn durch andere Bauformen nur schwer nutzbare Volumina ausgefüllt werden sollen. Die adsorptive Schüttung kann dabei einerseits als passive, nicht durchströmte Adsorptionsmasse dienen, was eine signifikante Erhöhung der Druckdifferenz verhindert. Alternativ kann die adsorptive Schüttung vergleichbar zu einem herkömmlichen Kombifilters aktiv durchströmt werden.

Der Adsorptionsfilter kann ferner als imprägnierter Schaum ausgeführt sein. Diese Ausgestaltung ist insbesondere vorteilhaft, wenn bauraumbedingt nur ein flaches Filterelement verbaut werden kann. Dann kann neben den adsorptiven Eigenschaften der Vorteil des Imprägniermittels bei vergleichsweise niedrigen Druckverlusten eingebracht werden.

Bei Einsatz in Gebieten mit hohen Luftfeuchten oder starken Schwankungen der Temperatur und Luftfeuchte, ist es vorteilhaft den Adsorptionsfilter als Zeolith-Struktur auszuführen. Bei dieser Ausgestaltung wird die Desorption unerwünschter Gase aus Adsorbentien gemindert und eine Stabilisierung des Innenraumklimas der mobilen Einrichtung erreicht.

Ein Filterelement kann als Vorfilter ausgebildet sein. Dabei ist der Vorfilter vorzugsweise in Reihe mit einem Partikelfilter geschaltet. Durch den Vorfilter steigert sich die Leistungsfähigkeit der Filteranordnung. Der Vorfilter kann dabei als Grob-Partikelfilter, Filtermatte, Schneeabscheider, Trägheitsabscheider, Fliegengitter oder Laubgitter ausgebildet sein.

Bevorzugt kommen als Vorfilter gefaltete Grob-Partikelfilter zum Einsatz. Diese scheiden Grobstaubpartikel ab und verhindern so ein vorzeitiges Zusetzen der nachgeschalteten Filterelemente.

In Fällen mit schmalen Einbauräumen, die keinen ausreichenden Platz für gefaltete Grob-Partikelfilter bieten, können als Vorfilter auch flache Filtermatten zum Einsatz kommen, welche die Funktion der Grobstaubabscheidung übernehmen.

Bei Einsatz in Gebieten mit häufigem Schneefall ist es vorteilhaft, wenn der Vorfilter als Schneeabscheider ausgeführt ist. Ein derartiger Vorfilter verhindert den Eintrag von Schnee und Eis in die Luftführung und damit auch in die nachfolgenden weiteren Filterelemente. Mit einem als Schneeabscheider ausgebildeten Vorfilter kann sichergestellt werden, dass auch bei starkem Schneefall die Belüftung der Kabine in ausreichendem Maße stattfindet.

In einer weiteren Ausführungsform kann der Vorfilter als Trägheitsabscheider ausgeführt werden. Dies ist insbesondere dann vorteilhaft, wenn mit hohem Grobstaubanteil in der Zuluft gerechnet werden muss. Der Trägheitsabscheider kann Grobstaubpartikel sicher abscheiden, ohne dass dies zu einer signifikanten Erhöhung der Druckdifferenz führt.

Der Vorfilter kann auch als Fliegengitter oder Laubgitter ausgeführt sein. Dies ist vorteilhaft, wenn kein Bauraum für einen größeren Vorfilter zur Verfügung steht. Fliegengitter oder Laubgitter können vorteilhaft als Spritzgussbauteil ausgeführt sein, welches direkt in die Luftführung integriert ist und damit keinen zusätzlichen Bauraum beansprucht.

Ein Filterelement kann als funktionaler Filter ausgebildet sein. Zusätzlich zu einem oder mehreren der oben beschriebenen Filterelemente ergibt sich die Möglichkeit einer maßgeschneiderten Filtrationslösung für eine mobile Einrichtung.

Funktionale Filterelemente im Sinne der Erfindung können Anti-Allergen-Filter, duftende Filter, VOC-Filter, NOₓ-Filter, SO₂-Filter, NH₃-Filter, Aldehyd-Filter, HEPA Filter, elektrostatische Filter oder ein Elektrofilter sein.

Ein funktionaler Filter kann vorteilhaft als Anti-Allergen Filter ausgeführt sein, welcher durch die Imprägnierung mit einer Fruchtsäure seine anti-allergene Wirkung erhält. Gemäß einer vorteilhaften Ausgestaltung ist die Imprägnierung auf eine Vlieslage aufgebracht, beispielsweise auf eine Trägerlage oder auf eine Abdecklage eines Kombifilters. Dabei kann der Filter als Faltenfilter ausgebildet sein.

In einer weiteren Ausführungsform kann der funktionale Filter als Filter mit Duftwirkung ausgeführt sein, wobei die Duftwirkung durch die Verwendung von geruchsintensiven Additiven erzielt wird. Die Duftwirkung kann so ausgeführt sein, dass sie individuellen Kundenansprüchen entspricht.
Ein funktionaler Filter kann insbesondere durch die Verwendung spezifischer Adsorbentien eine erhöhte Adsorptionsleistung gegenüber VOCs - volatile organic compounds -, nämlich gasförmigen organischen Kohlenwasserstoffen aufweisen. Insbesondere eignen sich hierfür Materialien mit hoher innerer Oberfläche, die Zeolithe oder Aktivkohlegranulate enthalten.

Daneben kann ein funktionaler Filter durch eine spezielle Imprägnierung der Adsorbentien eine erhöhte Adsorptionsleistung gegenüber Stickoxiden (NOₓ) aufweisen.

Ein funktionaler Filter kann durch Verwendung von alkalischen Adsorbentien auch eine erhöhte Adsorptionsleistung gegenüber sauren Gasen wie beispielsweise SO₂ aufweisen.

Ein weiterer funktionaler Filter kann durch die Verwendung von Adsorbentien mit Phosphorsäure- oder Schwefelsäure-Imprägnierung bereitgestellt werden, der dadurch eine erhöhte Adsorptionsleistung gegenüber Ammoniak (NH₃) aufweist.

Ein funktionaler Filter kann sich auch durch eine erhöhte Adsorptionsleistung gegenüber Aldehyden auszeichnen, die mittels eines speziellen Adsorbens erreicht wird.

In einer weiteren Ausführungsform kann der funktionale Filter dadurch gekennzeichnet sein, dass er aus einem HEPA-Filtermaterial hergestellt ist, welches es erlaubt, höchste Abscheideraten zu erzielen und auch Aerosole aus der Zuluft zu entfernen.

In einer weiteren Ausführungsform kann der funktionale Filter als elektrostatischer Filter ausgeführt sein. Bei diesem wird durch eine angelegte Spannung ein elektrisches Feld erzeugt, welches Partikel elektrisch auflädt und somit eine erhöhte Partikelabscheidung ermöglicht.

In einer weiteren Ausführungsform kann der funktionale Filter als Elektrofilter ausgeführt sein. Bei diesem wird mittels einer angelegten Spannung ein elektrisches Feld erzeugt, welches Partikel elektrisch auflädt und anschließend in Richtung der Elektroden ablenkt und abscheidet.

Der funktionale Filter kann auch als Wabenfilter mit Kanälen ausgebildet sein.

Durch gezielte Funktionstrennung der verschiedenen Filterelemente in Vorfilter, Partikelfilter, Adsorptionsfilter und funktionaler Filter ist es möglich, die Filtrationsleistung auf die jeweilige konkrete Filteraufgabe konkret anzupassen und die Anforderungen der einzelnen Stufen optimal zu gestalten.

Dabei sind die Filterelemente separat voneinander ausgebildet und beabstandet voneinander in der Luftführung montiert. Eine vorteilhafte Filteranordnung mit vier Filterelementen weist einen Vorfilter, einen Partikelfilter, einen Adsorptionsfilter und einen funktionalen Filter auf, welche separat voneinander ausgebildet und beabstandet voneinander in der Luftführung montiert sind. Dadurch ergibt sich eine Funktionstrennung der verschiedenen Filtrationsaufgaben, so dass die Filterelemente unabhängig voneinander ausgestaltet sein können. Dabei ist es insbesondere nicht erforderlich, das als Adsorptionsfilter ausgebildete Filterelement so auszugestalten, dass dieses Filterelement mit dem als Partikelfilter ausgebildeten Filterelement zu einem einzigen Filterelement zusammengeführt wird. Insofern kann das zweite Filterelement so ausgestaltet sein, dass es bei geringem Druckverlust eine hohe Filtrationsleitung des durchgeführten Luftstromes ermöglicht.

Die Luftführung kann zumindest einen Ausströmer aufweisen, wobei ein Filterelement, bevorzugt ein als adsorptiver Filter ausgebildetes Filterelement dem Ausströmer zugeordnet ist. Hierbei ist vorteilhaft, dass gasförmige Bestandteile, welche zu einer Geruchsbelästigung führen können, unmittelbar vor dem Ausströmer entfernt werden können, so dass auch gasförmige Bestandteile entfernt werden, die erst innerhalb der mobilen Einrichtung emittiert werden.

Dabei kann das Filterelement einen Strömungsgleichrichter bilden. Insbesondere bei der Ausbildung des Filterelementes als Wabenfilter ergibt sich eine Vergleichmäßigung der Zuluft, wenn diese die verhältnismäßig langen Kanäle des Wabenfilters passiert. Durch die Gleichrichtung der Strömung reduzieren sich Geräusche, so dass Geräuschemissionen der Zuluftführung reduziert werden.

In der Luftführung kann eine Luftfördereinheit angeordnet sein. Dabei können Filterelemente der Filteranordnung in Strömungsrichtung betrachtet einzeln oder gruppenweise vor und/oder hinter der Luftfördereinheit angeordnet sein.

Bei dieser Ausgestaltung ist vorteilhaft, dass in der Zuluft transportierte Partikel wie Staub und Pollen durch das erste Filterelement zurückgehalten werden. Ein weiteres Filterelement entfernt gasförmige Bestandteile aus der Zuluft. Darunter fallen auch gasförmige Bestandteile, welche von der Luftfördereinheit emittiert werden. Dies kann beispielsweise durch den Elektromotor der Luftfördereinheits erzeugtes Ozon sein. Bei einer vorteilhaften Luftführung ist ein erstes Filterelement in Strömungsrichtung betrachtet vor der Luftfördereinheit angeordnet und ein zweites Filterelement ist hinter der Luftfördereinheit angeordnet. Dabei ist das erste Filterelement als Partikelfilter ausgebildet und das zweite Filterelement als Adsorptionsfilter.

In der Luftführung kann der Verdampfer einer Klimatisierungseinrichtung angeordnet sein. Dabei kann zumindest ein Filterelement in Strömungsrichtung betrachtet vor dem Verdampfer angeordnet sein und zumindest ein Filterelement in Strömungsrichtung betrachtet nach dem Verdampfer in der Luftführung angeordnet sein. Dadurch ist es beispielsweise möglich, etwaige von dem Verdampfer emittierte Begleitstoffe zu filtrieren. Ferner können vor dem Verdampfer angeordnete Filterelemente verhindern, dass sich unerwünschte Stoffe auf dem Verdampfer anlagern.

Die Luftführung kann eine erste Luftführung für die Zuluft und eine zweite Luftführung für die Umluft aufweisen. Dabei können für jede Luftführung einzelne oder mehrere separate Filterelemente vorgesehen sein. Darüber hinaus können Filterelemente vorgesehen sein, die eine Filtration gleichzeitig für beide Luftführungen durchführen. Bei der Filtrierung der Umluft ist insbesondere das Entfernen von aus dem Innenraum der mobilen Einrichtung emittierten Substanzen relevant, während bei der Filtrierung der Zuluft darüber hinaus das Entfernen von Schadgasen gewünscht ist. Daher sind in einer vorteilhaften Ausgestaltung in Bezug auf das zweite Filterelement unterschiedliche Filterelemente für die Zuluft und die Umluft vorgesehen.

Die Filteranordnung kann ferner auch ein in der Kabine der mobilen Einrichtung angeordnetes Filterelement umfassen. Dabei ist es insbesondere denkbar, dass das in der Kabine angeordnete Filterelement ein passives Filterelement ist. Ein passives Filterelement wird im Gegensatz zu aktiven Filterelementen nicht aktiv durchströmt. In diesem Ausgestaltungsbeispiel erreicht die Luftströmung den Auslass der Luftführung erst nach Durchströmung der Kabine.

Die mobile Einrichtung kann ein Kraftfahrzeug sein. Bei dieser Ausgestaltung ist die Zuluftanordnung ausgerüstet, aufbereitete Zuluft für die Belüftung der Kabine des Kraftfahrzeugs zur Verfügung zu stellen.

Einige Ausgestaltungen der erfindungsgemäßen Zuluftanordnung werden nachfolgend anhand der Figuren näher erläutert. Diese zeigen, jeweils schematisch:
- Fig. 1: eine Zuluftanordnung mit einer zweistufigen Filteranordnung;
- Fig. 2: eine Zuluftanordnung mit einer zweistufigen Filteranordnung;
- Fig. 3: eine Zuluftanordnung mit einer dreistufigen Filteranordnung;
- Fig. 4: eine Zuluftanordnung mit einer vierstufigen Filteranordnung;
- Fig. 5: eine Zuluftanordnung mit Umluftführung.

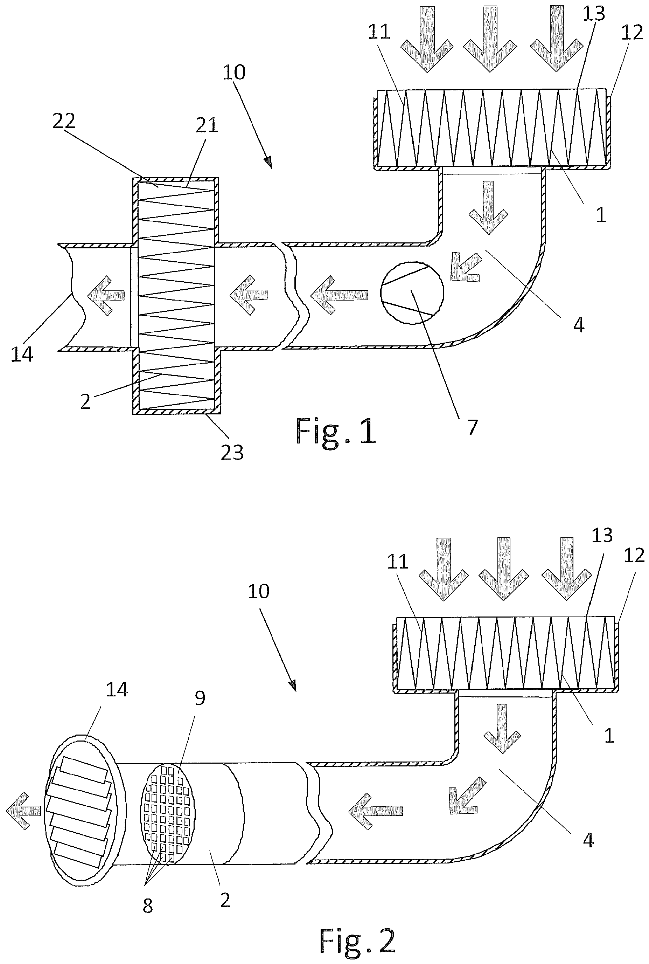

Figur 1 zeigt eine Zuluftanordnung 10 einer mobilen Einrichtung mit einer Luftfördereinheit 7, umfassend zumindest ein erstes Filterelement 1 und ein zweites Filterelement 2, welche in einer Luftführung 4 der mobilen Einrichtung angeordnet sind.

Das erste Filterelement 1 ist als Partikelfilter in Form eines Faltenfilters ausgebildet. Der Faltenfilter umfasst zumindest eine Lage 11 aus einem Vliesstoff. Das erste Filterelement 1 ist austauschbar in einem Filtergehäuse 12 angeordnet, welches Teil der Luftführung 4 ist.

Das zweite Filterelement 2 ist als Adsorptionsfilter ausgebildet. Dabei ist das zweite Filterelement 2 in dieser Ausgestaltung ebenfalls ein Faltenfilter, umfassend Abdecklagen 21 aus Vliesstoff und eine Aktivkohlelage 22. Das zweite Filterelement 2 ist austauschbar in einem zweiten Filtergehäuse 23 angeordnet, welches Teil der Luftführung 4 ist.

Das erste Filterelement 1 und das zweite Filterelement 2 sind separat voneinander ausgebildet und beabstandet voneinander in der Luftführung 4 montiert. Dabei ist das erste Filterelement 1 einströmseitig in der Luftführung 4 angeordnet und verhindert, dass partikelförmige Verunreinigungen in die Luftführung 4 und in die Kabine der mobilen Einrichtung gelangen. Das zweite Filterelement 2 ist abströmseitig in der Luftführung 4 angeordnet und verhindert, dass unerwünschte gasförmige Begleitstoffe in die Kabine der mobilen Einrichtung gelangen.

Die mobile Einrichtung ist in dieser Ausgestaltung ein Kraftfahrzeug.

Figur 2 zeigt eine Zuluftanordnung 10 für eine mobile Einrichtung, umfassend einen Einlass 13, eine Luftführung 4, einen Auslass 14 und eine Filteranordnung mit einem ersten Filterelement 1 und einem zweiten Filterelement 2. Dabei sind das erste Filterelement 1 und das zweite Filterelement 2 separat zueinander ausgebildet und beabstandet zueinander in der Luftführung 4 angeordnet.

Das erste Filterelement 1 ist als Partikelfilter ausgebildet. Dabei ist das erste Filterelement 1 ein Faltenfilter, umfassend zumindest eine Lage 11 aus einem Vliesstoff. Das erste Filterelement 1 ist austauschbar in einem Filtergehäuse 12 angeordnet, welches Teil der Luftführung 4 ist.

Das zweite Filterelement 2 ist als Adsorptionsfilter ausgebildet. Das zweite Filterelement 2 ist als Wabenfilter ausgebildet. Der Wabenfilter umfasst einen oder mehrere Wabenkörper, welcher eine Vielzahl von Kanälen 8 aufweist, welche durch Kanalwände 9 begrenzt sind. Der vorliegende Wabenfilter ist aus mehreren Wabenkörpern segmentartig zusammengesetzt. Die Wabenkörper sind in einem Halterahmen fixiert, wobei der Halterahmen so ausgebildet ist, dass er eine Dichtfläche gegenüber dem Filtergehäuse bildet.

In einer alternativen Ausgestaltung können die Wabenkörper durch stoffschlüssige Verbindung miteinander zu einem Wabenfilter zusammengesetzt werden. Darüber hinaus kann die Dichtfläche alternativ in der Luftführung 4 vorgesehen sein.

Bei der vorliegenden Ausgestaltung umfasst das zweite Filterelement 2 Aktivkohle. Zur Herstellung wird Aktivkohle mittels Extrusion in die wabenförmige Gestalt gebracht. Das zweite Filterelement 2 ist zylinderförmig ausgebildet und als Insert in die rohrförmige Luftführung eingesetzt.

In einer vorteilhaften Ausgestaltung ist der Halterahmen rohrförmig ausgebildet und in der rohrförmigen Luftführung einer Klimatisierungseinheit, insbesondere einer mobilen Klimatisierungseinheit angeordnet. Dabei weist die Luftführung häufig einen runden oder rechteckigen Querschnitt auf, so dass der Halterahmen entsprechend rund oder rechteckig ausgestaltet ist.

Das erste Filterelement 1 ist einströmseitig in der Luftführung 4 angeordnet und verhindert, dass partikelförmige Verunreinigungen in die Luftführung und in die Kabine der mobilen Einrichtung gelangen. Das zweite Filterelement 2 ist abströmseitig in der Luftführung 4 angeordnet und verhindert, dass unerwünschte gasförmige Begleitstoffe in die Kabine der mobilen Einrichtung gelangen.

Zur Belüftung der Kabine der mobilen Einrichtung weist die Luftführung 4 als Auslass 14 mehrere Ausströmer auf. Dabei ist jedem Ausströmer ein zweites Filterelement 2 zugeordnet ist. Das zweite Filterelement 2, ausgebildet als Wabenfilter, bildet einen Strömungsgleichrichter und verringert Ausströmgeräusche der Luftführung 4.

Das zweite Filterelement 2 ist ebenfalls austauschbar in der Luftführung 4 angeordnet.

In einer alternativen Ausgestaltung kann das zweite Filterelement 2, insbesondere in der Ausgestaltung als Wabenfilter eine integrale Einheit mit dem Ausströmer bilden und dabei auch auf die Lebensdauer der mobilen Einrichtung ausgelegt sein.

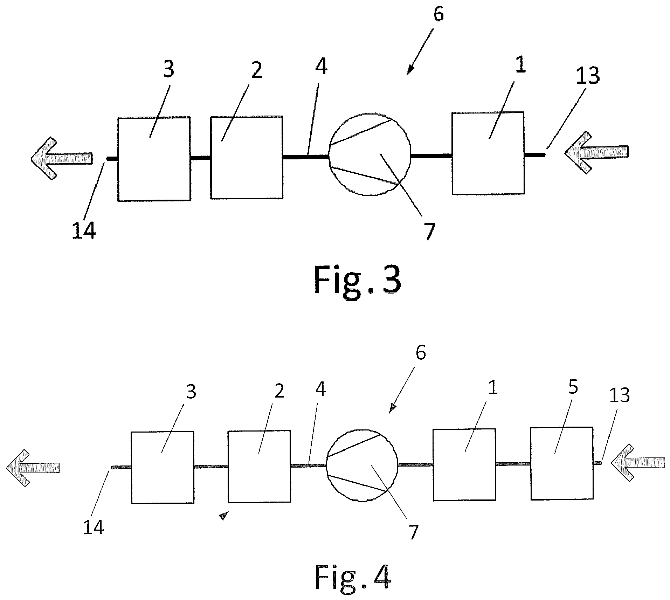

Figur 3 zeigt eine Zuluftanordnung 10 mit einer Klimatisierungseinrichtung 6 für eine mobile Einrichtung mit Luftfördereinheit 7, umfassend zumindest ein erstes Filterelement 1, ein zweites Filterelement 2 und ein drittes Filterelement 3, welche in einer Luftführung 4 der mobilen Einrichtung angeordnet sind.

Das erste Filterelement 1 ist in Strömungsrichtung betrachtet vor der Luftfördereinheit 7 angeordnet, während das zweite Filterelement 2 und das dritte Filterelement 3 in Strömungsrichtung betrachtet nach der Luftfördereinheit 7 angeordnet sind. Zwischen erstem Filterelement 1 und zweitem Filterelement 2 ist ferner noch ein Verdampfer der Klimatisierungseinrichtung 6 angeordnet.

Das erste Filterelement 1 ist als Partikelfilter ausgebildet. In Strömungsrichtung betrachtet, ist nach dem zweiten Filterelement 2 ein drittes Filterelement 3 angeordnet. Dabei bildet das erste Filterelement 1 einen Feinpartikelfilter, das zweite Filterelement 2 einen Adsorptionsfilter und das dritte Filterelement 3 einen funktionalen Filter. Das dritte Filterelement 3 ist ebenso wie das erste Filterelement 1 als Faltenfilter ausgebildet und austauschbar in der Luftführung 4 angeordnet.

Das als Adsorptionsfilter ausgestaltete zweite Filterelement 2 ist ebenfalls austauschbar in der Luftführung 4 angeordnet. Das zweite Filterelement 2 ist als Wabenfilter ausgebildet. Dabei besteht ein Wabenfilter aus mindestens einem Wabenkörper, kann aber auch aus mehreren Wabenkörpern zusammengesetzt werden. Ein Wabenkörper umfasst eine Vielzahl von Kanälen, welche durch Kanalwände begrenzt sind. Der Wabenkörper wiederum ist aus Teilsegmenten zusammengesetzt. Die Wabenkörper sind in einem Halterahmen fixiert, wobei der Halterahmen so ausgebildet ist, dass er eine Dichtfläche gegenüber dem Filtergehäuse bildet.

In einer geeignet ausgestalteten Luftführung kann der Wabenfilter ohne Halterahmen verbaut werden. Bei dieser Ausgestaltung ist das Dichtmittel der Luftführung zugeordnet.

Bei der vorliegenden Ausgestaltung umfasst das zweite Filterelement 2 Aktivkohle. Zur Herstellung wird Aktivkohle mittels Extrusion in die wabenförmige Gestalt gebracht. Das zweite Filterelement 2 ist als Insert in die rohrförmige Luftführung eingesetzt.

In einer vorteilhaften Ausgestaltung ist der Halterahmen rohrförmig ausgebildet und in der rohrförmigen Luftführung einer Klimaanlage, insbesondere einer mobilen Klimaanlage angeordnet. Dabei weist die Luftführung häufig einen runden oder rechteckigen Querschnitt auf, so dass der Halterahmen entsprechend rund oder rechteckig ausgestaltet ist.

Das dritte Filterelement 3 ist im vorliegenden Anwendungsbeispiel ein Anti-Allergen-Filter und als Faltenfilter ausgebildet. Dieses Filterelement umfasst zumindest eine erste Lage aus einem Vliesstoff und zumindest eine Aktivkohlelage, wobei die Anti-Allergen-Wirkung durch Imprägnierung der ersten Lage aus Vliesstoff mit Fruchtsäure bewirkt wird.

Figur 4 zeigt eine Zuluftanordnung 10 gemäß Figur 3, allerdings mit vier Filterelementen 1, 2, 3, 5. Insofern umfasst die Filteranordnung gemäß Figur 4 ein erstes Filterelement 1, ein zweites Filterelement 2, ein drittes Filterelement 3 und ein viertes Filterelement 5, welche in einer Luftführung 4 der mobilen Einrichtung angeordnet sind.

Bei der Ausgestaltung gemäß Figur 4 ist das erste Filterelement 1 als Feinpartikelfilter, das zweite Filterelement 2 als Wabenfilter und das dritte Filterelement 3 als Anti-Allergen-Filter ausgebildet. Ergänzt wird die Filteranordnung durch das viertes Filterelement 5, welches in Strömungsrichtung betrachtet vor dem ersten Filterelement 1 angeordnet ist.

Das vierte Filterelement 5 übernimmt bei der vorliegenden Ausgestaltung die Funktion eines Vorfilters und ist als Schneeabscheider ausgebildet.

Durch die zusätzliche Verwendung eines Schneeabscheiders wird das System zuverlässig vor angesaugtem Schnee geschützt, der nicht bis zum ersten Filterelement 1 vordringen kann. Somit besteht keine Gefahr, dass eines der nachfolgenden Filterelemente durch den schmelzenden Schnee in seiner Funktion beeinträchtigt wird.

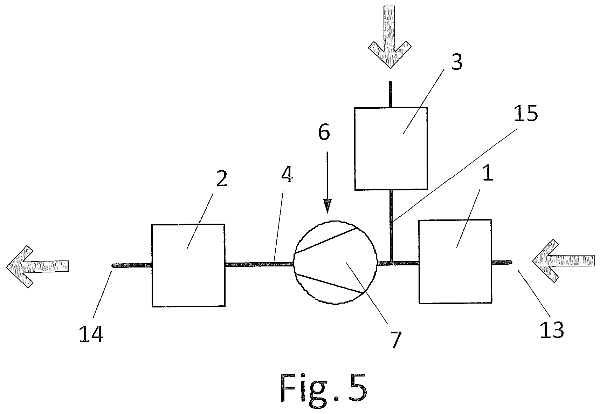

Figur 5 zeigt eine Zuluftanordnung 10 für eine mobile Einrichtung mit einer Klimatisierungseinrichtung 6 mit Luftfördereinheit 7, umfassend zumindest ein erstes Filterelement 1 und ein zweites Filterelement 2, welche in einer Luftführung 4 der mobilen Einrichtung angeordnet sind. Zudem ist ein drittes Filterelement 3 in einer Umluftführung 15 vorhanden, die nach dem ersten Filterelement 1 und vor der Luftfördereinheit 7 in die Luftführung 4 mündet. Insofern weist die Zuluftanordnung 10 gemäß Figur 5 zwei Strömungsführungen auf. Eine Luftführung 4 leitet Außenluft in den Innenraum der mobilen Einrichtung. Eine Umluftführung 15 leitet aus dem Innenraum der mobilen Einrichtung angesaugte Luft in den Innenraum zurück.

Wie bei der Ausgestaltung gemäß Figur 2 ist das erste Filterelement 1 als Faltenfilter und das zweite Filterelement 2 als Kombifilter ausgebildet. Insofern ist das erste Filterelement 1 bei dieser Ausgestaltung ein Partikelfilter. Das zweite Filterelement 2 ist hingegen ein kombinierter Partikelfilter und Adsorptionsfilter. Das in der Umluftführung 15 angeordnete dritte Filterelement 3 ist als Feinpartikelfilter ausgebildet.

Dabei ist das dritte Filterelement 3 in der Umluftführung 15 angeordnet und reduziert im Umluftbetrieb der Klimatisierungseinrichtung 6 die im Fahrzeuginnenraum, bzw. die in der Kabine der mobilen Einrichtung vorhandenen Partikel. Bei diesem Ausführungsbeispiel übernimmt das zweite Filterelement 2 die Filtration sowohl für die reguläre Luftführung 4, welche zunächst über das erste Filterelement 1 erfolgt sowie für die Umluftführung 15, welche zunächst über das dritte Filterelement 3 erfolgt.

## Patentansprüche

1. Zuluftanordnung (10) für eine mobile Einrichtung, umfassend zumindest einen Einlass (13), zumindest eine Luftführung (4), zumindest einen Auslass (14) und eine Filteranordnung mit mindestens zwei Filterelementen (1, 2), wobei ein erstes Filterelement (1) und ein separat zu dem ersten Filterelement ausgebildetes zweites Filterelement (2) in der Luftführung (4) angeordnet sind.

2. Zuluftanordnung nach Anspruch 1, **dadurch gekennzeichnet, dass** die Filteranordnung zumindest drei Filterelemente (1, 2, 3) aufweist.

3. Zuluftanordnung nach Anspruch 1 oder 2, **dadurch gekennzeichnet, dass** die Filteranordnung zumindest vier Filterelemente (1, 2, 3, 5) aufweist.

4. Zuluftanordnung nach einem der Ansprüche 1 bis 3, **dadurch gekennzeichnet, dass** zumindest ein Filterelement als Partikelfilter ausgebildet ist.

5. Zuluftanordnung nach einem der Ansprüche 1 bis 4, **dadurch gekennzeichnet, dass** zumindest ein Filterelement als Adsorptionsfilter ausgebildet ist.

6. Zuluftanordnung nach einem der Ansprüche 1 bis 5, **dadurch gekennzeichnet**, zumindest ein Filterelement als funktionaler Filter ausgebildet ist.

7. Zuluftanordnung nach Anspruch 5 oder 6, **dadurch gekennzeichnet, dass** zumindest ein Filterelement als Wabenfilter mit Kanälen (8) und Kanalwänden (9) ausgeführt ist.

8. Zuluftanordnung nach einem der Ansprüche 1 bis 7, **dadurch gekennzeichnet, dass** zumindest ein Filterelement als Vorfilter ausgebildet ist.

9. Zuluftanordnung nach einem der Ansprüche 1 bis 8, **dadurch gekennzeichnet, dass** das erste Filterelement (1), das zweite Filterelement (2), das dritte Filterelement (3) und das vierte Filterelement (5) beabstandet voneinander in der Luftführung (4) angeordnet sind.

10. Zuluftanordnung nach einem der Ansprüche 1 bis 9, **dadurch gekennzeichnet, dass** in der Luftführung (4) eine Luftfördereinheit (7) angeordnet ist.

11. Zuluftanordnung nach Anspruch 10, **dadurch gekennzeichnet, dass** zumindest ein Filterelement in Strömungsrichtung betrachtet vor der Luftfördereinheit (7) in der Luftführung (4) angeordnet ist und dass zumindest ein Filterelement in Strömungsrichtung betrachtet nach der Luftfördereinheit (7) in der Luftführung (4) angeordnet ist.

12. Zuluftanordnung nach einem der Ansprüche 1 bis 11, **dadurch gekennzeichnet, dass** in der Luftführung (4) der Verdampfer einer Klimatisierungseinrichtung angeordnet ist.

13. Zuluftanordnung nach Anspruch 12, **dadurch gekennzeichnet, dass** zumindest ein Filterelement in Strömungsrichtung betrachtet vor dem Verdampfer in der Luftführung (4) angeordnet ist und dass zumindest ein Filterelement in Strömungsrichtung betrachtet nach dem Verdampfer in der Luftführung (4) angeordnet ist.

14. Zuluftanordnung nach einem der Ansprüche 1 bis 13, **dadurch gekennzeichnet, dass** zumindest ein Filterelement dem Einlass (13) und zumindest ein Filterelement dem Auslass (14) der Luftführung (4) zugeordnet ist.

15. Zuluftanordnung nach einem der Ansprüche 1 bis 14, **dadurch gekennzeichnet, dass** eine erste Luftführung (4) für eine Zuluft und eine Umluftführung (15) für eine Umluft vorgesehen ist.

16. Zuluftanordnung nach Anspruch 15, **dadurch gekennzeichnet, dass** zumindest ein Filterelement der Umluftführung (15) zugeordnet ist.

17. Zuluftanordnung nach einem der Ansprüche 1 bis 16, **dadurch gekennzeichnet, dass** die mobile Einrichtung ein Kraftfahrzeug ist.
